# EUROPEAN PATENT APPLICATION

(11) **EP 2 278 797 A2**
(43) Date of publication of application: **26.01.2011**
(21) Application number: 10012223.3
(22) Date of filing: 27.10.1999
(51) Int. Cl.: H04N 5/445

(54) **Method and apparatus for selecting items in an on-screen menu**

(30) Priority: 27.10.1998 KR 19980045005
(62) Divisional of application: 99121428.9
(71) Applicant: Samsung Electronics Co., Ltd., Suwon-si, Gyeonggi-do 442-742 (KR)
(72) Inventor: Kim, Phil-tae, Seoul (KR)
(74) Representative: Grünecker, Kinkeldey, Stockmair & Schwanhäusser Anwaltssozietät

(57) **Abstract**

The invention provides a method and apparatus for selecting an item of an on-screen menu including a plurality of menu fields. A pointer is moved from a start menu field to a target menu field. The speed of movement of said pointer is increased if the start menu field and the target menu field are of different menu levels in case the on-screen menu is a multi-level menu. In another embodiment, the speed of movement of the pointer is increased if the on-screen menu includes no other menu field than the target menu field in the direction in which the pointer moves. For this purpose, the number of menu fields within a predetermined direction angle which is preferably ±60° is determined on the basis of the coordinate values of the current position of the pointer.

## Description

The present invention relates to a method and apparatus for selecting items in an on-screen menu.

On-screen menus are used in several fields and are in particular known from television and video apparatus. The use of on-screen menus usually is very convenient as it allows for selecting items in a user-friendly and easy-to-learn way even if the on-screen menu includes a high number of menu items.

There exist different kinds of on-screen menus including those which are hierarchically organized. Hierarchically organized menus are multi-level menus in which sub-menus exist which are activated upon selecting an item of the main menu. Sub-menus may again have further sub-menus.

Another kind of on-screen menus exist which do not involve multiple levels but which nevertheless include multiple menus. One example of such menus are one-dimensional menus in which the items of one and the same menu are located in one direction whereas different menus are located in another direction.

In the prior art, operation on on-screen menus has often become cumbersome with the increasing number of menus since the menu selecting time necessary for moving an on-screen pointer between icons of different menus or menu levels has increased significantly.

It is therefore the object of the present invention to provide an on-screen menu selecting method and apparatus by which the menu selecting time is shortened.

This object is solved by the invention as claimed in claims 1 and 9.

Preferred embodiments of the present invention are defined in the dependent claims.

In one embodiment, the present invention provides an on-screen menu selecting method in which the menu selection time is shortened by making the speed of movement of a pointer between icons of different levels faster than that of movement of the pointer between icons of the same level.

Here, the on-screen menu is displayed at multiple levels.

In another embodiment, the on-screen menu selecting method further includes a first determination step of determining the direction in which the pointer is moving; a second determination step of determining whether there is only one menu that is displayed in the direction determined in the first determination step; and a step of controlling the pointer to move fast in the determined direction, if it is determined in the second determination step that only one menu is displayed.

In the first determination step, the direction in which a pointer is moving is determined by calculating a predetermined direction angle on the basis of the coordinate value of a current placed pointer, and the predetermined direction angle is ±60°.

In yet another embodiment, the present invention provides an on-screen menu selecting apparatus including: a key operation unit having a remote controller and a key operator of a panel, particularly, having an on-screen pointer movement key for moving an on-screen pointer; an on-screen menu generator for generating an on-screen menu; an on-screen pointer moving unit for moving the on-screen pointer in response to the movement of the on-screen pointer movement key; an on-screen pointer speed controller for controlling the speed of movement of the on-screen pointer between icons, according to a predetermined control signal; and a controller for receiving a signal from the key operation unit, and controlling the on-screen menu generator to generate the on-screen menu, controlling the on-screen pointer moving unit to move the on-screen pointer, and particularly controlling the speed of movement of the on-screen pointer between icons of different levels to be faster than an initially-set speed.

The controller judges the direction in which the pointer is to be moved, determines whether only one menu has been displayed in the judged direction, and controls the pointer to move fast in the judged direction, if it is determined that only one menu has been displayed. The controller determines the direction of movement of the pointer by calculating a predetermined direction angle on the basis of the coordinate value of the pointer located at present.

The invention will become more apparent by describing in detail preferred embodiments thereof with reference to the attached drawings in which:
FIG. 1 is an exterior view of a remote controller for high definition televisions (HDTV);
FIG. 2 is a view illustrating a multi-level on-screen menu;
FIG. 3 is a flowchart illustrating a method of selecting an item in an on-screen menu of multi levels, according to the present invention;
FIG. 4 is a flowchart illustrating a method of selecting an item in an on-screen menu, according to another embodiment of the present invention; and
FIG. 5 is a block diagram of an on-screen menu selecting apparatus according to the present invention.

A preferred embodiment of the present invention takes as concrete examples a remote controller and a remote controller for high-definition television (HDTV) receivers which operates according to an on-screen menu system.

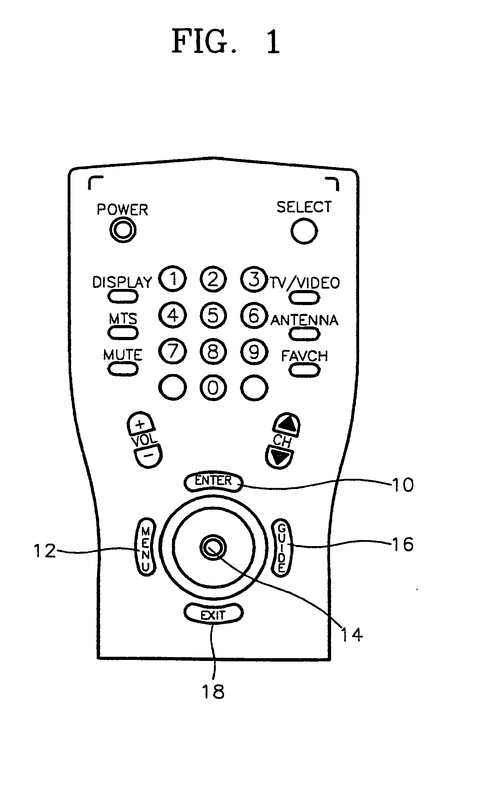

Referring to FIG. 1 showing the exterior of a remote controller for HDTVs, reference numeral 10 denotes an enter key, reference numeral 12 denotes a menu key, reference numeral 14 denotes an I-point control key, reference numeral 16 denotes a guide key, and reference numeral 18 is an exit key.

The enter key 10 is used to select an item displayed on an on-screen menu, and the menu key 12 is used to display an on-screen menu or to exit from a previous menu.

The I-point control key 14 operates like a joystick, and provides controls so that an on-screen pointer moves in left, right, upward and downward directions. An icon pointed by the on-screen pointer can be distinguished from the other icons by changing its color to a predetermined color.

The guide key 16 represents an on-screen program guide for HDTV receivers, and the exit key 18 is used to exit from the on-screen menu.

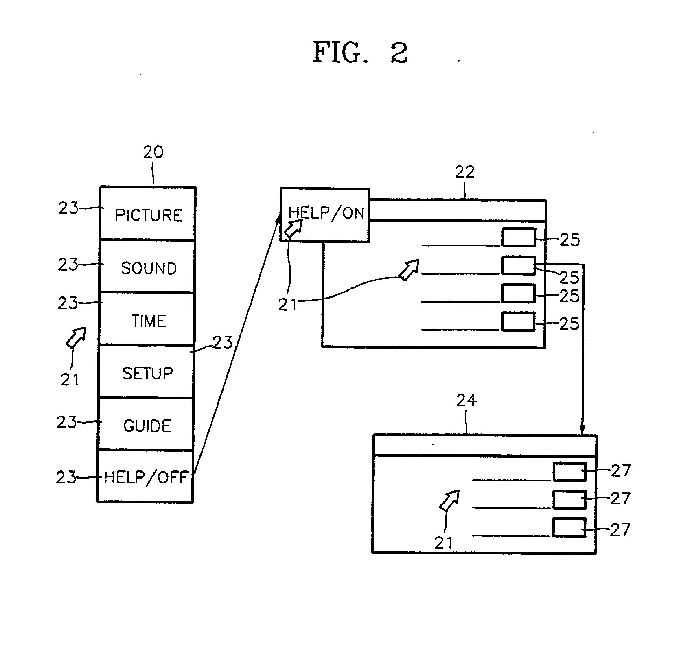

Referring to FIG. 2 showing an on-screen menu, reference numerals 20, 22 and 24 denote first, second and third level menus, respectively, reference numeral 21 denotes an on-screen pointer which is controlled by the I-point control key 14, and reference numerals 23, 25 and 27 denote icons. Here, continuous display of the first level menu, the second level menu and the third level menu is called a multi-level menu. However, besides the case in which a multi-level menu is displayed, there is another case in which a separate menu screen is one-dimensionally displayed on one screen, which is not shown in the drawing.

A method of selecting an on-screen help function is taken as an example to describe the mutual operation between the remote controller of FIG. 1 and the on-screen menu of FIG. 2, which will now be described.

First, when the menu key 12 is depressed on the remote controller, the first level menu 20 shown in FIG. 2 is displayed on a screen. The on-screen pointer 21 is moved upward and downward by the control of the I-point control key 14, so that it is placed on the "Hetp/off" icon. Then, the enter key 10 is pressed, and the "help/off" is then changed to "help/on" and simultaneously the second level menu 22 appears.

The on-screen pointer 21 is moved to a desired icon of the icons 25 using the I-point controller 14 in the same method, and the enter key 10 is then pressed. At this time, the third level menu 24 is displayed on the screen.

In this way, the enter key 10 installed on the remote controller, is a sort of a key issuing a selection completion command, and acts as an enter key which is used in computers.

In a conventional on-screen menu selection method, the speed of an on-screen pointer which moves between icons of the same level is kept consistent with that of an on-screen pointer which moves between icons of different levels, thereby selecting a desired menu screen. That is, in the prior art, the speed of movement of a pointer between icons of the same level is kept equal to that of movement of a pointer between icons of different levels. In contrast, in the present invention, the speed of movement of a pointer between icons of the same level is made different from the speed of movement of the pointer between icons of different levels, so that the menu selection time is shortened. That is, the speed of movement of the pointer between icons of different levels is made faster than that of movement of the pointer between icons of the same level, in order to shorten the menu selection time.

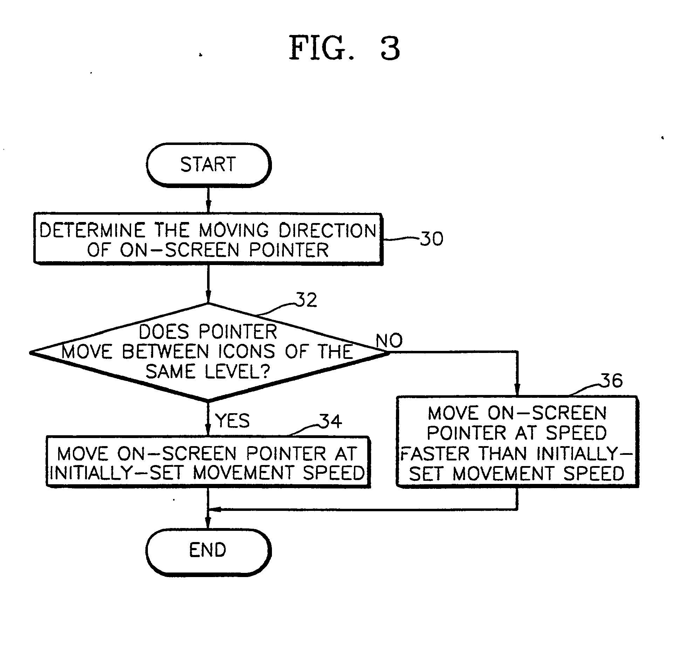

FIG. 3 illustrates an on-screen menu selecting method according to the present invention, particularly, a method of selecting items of an on-screen menu which is represented in multiple levels.

The moving direction of an on-screen menu is determined in step 30, and a determination is made as to whether the on-screen pointer moves between icons of the same level, in step 32. That is, it can be seen from FIG. 2 that the movement of the pointer between the same level is made upward and downward and the movement of the pointer between different levels is made from side to side. The on-screen pointer 21 change coordinates whenever it moves, so that the moving direction of the pointer can be determined by the values of the changed coordinates.

In the case shown in FIG. 2, if the variation of coordinate along the X-axis direction is larger than the variation of coordinate along the Y-axis direction, the movement of the pointer is determined to be movement between icons of different levels. If a variation along the Y-axis direction is larger than that along the X-axis direction, the movement of the pointer is determined to be movement between icons of the same level.

If it is determined in step 32 that the pointer moves between icons of the same level, the on-screen pointer is moved at an initially-set movement speed, in step 34. On the other hand, if it is determined in step 32 that the pointer moves between icons of different levels, the on-screen pointer is moved at a speed faster than the initially-set movement speed, in step 36.

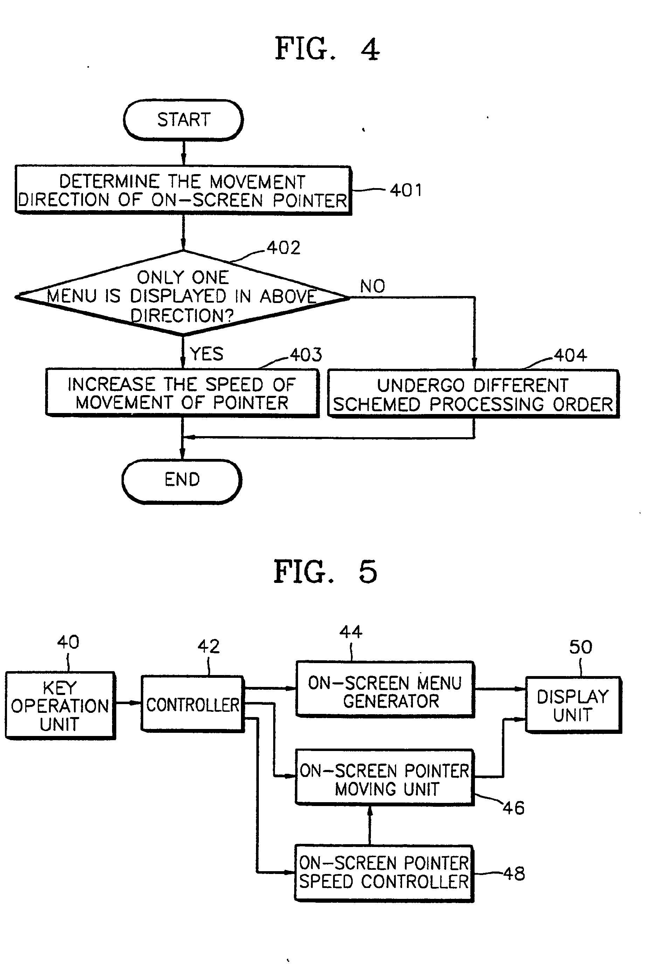

FIG. 4 illustrates another embodiment of an on-screen menu selecting method according to the present invention. An embodiment in the case that a menu is not displayed in multiple levels but a menu screen is one-dimensionally displayed, will now be described.

First, the direction in which an on-screen pointer is to be moved, is determined in step 401. A determination is made as to whether only one menu has been displayed in the direction determined in step 401, in step 402. In steps 401 and 402, how many menus are displayed within a predetermined direction angle (for example, ±60°) is determined on the basis of the current direction of movement of pointer.

If it is determined in step 402 that only one menu is displayed, the pointer is controlled to move faster in the determined movement direction, in step 403. On the other hand, if it is determined in step 402 that two or more menus are displayed, a different schemed processing order is undergone, in step 404. This step 404 will not be described in more detail.

FIG. 5 shows an on-screen menu selecting apparatus according to the present invention. Referring to FIG. 5, the apparatus includes a key operation unit 40, a controller 42, an on-screen menu generator 44, an on-screen pointer moving unit 46, an on-screen pointer speed controller 48, and a display unit 50.

The key operation unit 40 has a remote controller and a key operator of a panel, particularly, has an on-screen pointer movement key for moving an on-screen pointer. The on-screen menu generator 44 generates an on-screen menu under the control of the controller 42 and provides it to the display unit 50. The on-screen pointer moving unit 46 moves the on-screen pointer under the control of the controller 42 so that the on-screen pointer corresponds to the movement of an I-pointer which is an on-screen pointer movement key. The on-screen pointer speed controller 48 controls the on-screen pointer to move between icons of different levels at a speed faster than an initially-set movement speed.

The controller 42 receives a signal from the key operation unit 40 and controls the generation of the on-screen menu and movement of the on-screen pointer. In particular, the movement of the on-screen pointer between icons of different levels is controlled to be faster than the initially-set speed. Also, the controller 42 judges the direction in which the pointer is to be moved, and determines whether only one menu is displayed in the judged direction. If only one menu is determined as being displayed, the pointer is controlled to move fast in the moving direction. That is, the controller 42 determines the direction in which the pointer is to be moved, by calculating a predetermined direction angle on the basis of the coordinate value of a current located pointer.

According to the present invention as described above, the menu selection time is shortened by increasing the speed of movement of an on-screen pointer.

The invention provides the following further embodiments 1-11:
1. A method of selecting an item of an on-screen menu including a plurality of menu fields (20, 22, 24), said method comprising the step of moving a pointer (21) from a start menu field to a target menu field, wherein the speed of movement of said pointer depends on the spatial and/or hierarchical relationship between the start menu field and the target menu field.
2. The method according to embodiment 1, wherein said on-screen menu is a multi-level menu, and the speed of movement of said pointer is increased if the start menu field and the target menu field are of different menu levels.
3. The method according to embodiment 1, wherein said on-screen menu includes no other menu field than the target menu field in the direction in which the pointer moves.
4. The method according to one of embodiments 1 to 3, further comprising the step of determining (30; 401) the direction in which the pointer moves.
5. The method according to embodiment 4, further comprising the step of determining how many menu fields are located within a predetermined direction angle on the basis of the coordinate values of the pointer's current position.
6. The method according to embodiment 5, wherein said predetermined direction angle is ±60°.
7. The method according to one of embodiments 1 to 6, wherein said on-screen menu is displayed on a television screen.
8. A computer readable storage medium for storing instructions to perform the method according to one of embodiments 1 to 7.
9. An apparatus for selecting an item of an on-screen menu including a plurality of menu fields (20, 22, 24), comprising: an on-screen menu generator (44) for generating said on-screen menu; and means (40, 42, 46, 48, 50) for displaying and moving a pointer (21) from a start menu field to a target menu field, said means comprising a speed controller (48) for controlling the speed of movement of said pointer depending on the spatial and/or hierarchical relationship between the start menu field and the target menu field.
10. The apparatus according to embodiment 9, being adapted to perform the method according to one of embodiments 1 to 7.
11. The apparatus according to embodiment 9 or 10, wherein said means (40, 42, 46, 48, 50) for displaying and moving said pointer includes a remote controller comprising an on-screen pointer movement key (14).

## Claims

1. An on-screen menu selecting method comprising the steps of:
determining the movement direction of a pointer;
determining whether only one menu is displayed on the movement direction;
controlling the pointer to move with an increased speed when it is determined that only one menu is displayed on the movement direction.

2. The method according to claim 1, further comprising the step of determining the direction in which the pointer moves by the values of coordinates changed during the movement.

3. The method according to claim 1, further comprising the step of determining whether only one menu is displayed within a predetermined direction angle on the basis of the coordinate values of the pointer's current position.

4. The method according to claim 1, wherein the on-screen menu is a multi-level menu.

5. The method according to claim 1, wherein the on-screen menu is displayed on a television screen.

6. A computer readable storage medium for storing instructions to perform the method according to one of claims 1 to 5.

7. An apparatus for selecting on-screen menu, the apparatus comprising:
an on-screen menu generator(44) for generating said on-screen menu;
means for determining(401, 402) the movement direction of a pointer, and whether only one menu is displayed on the movement direction;
a speed controller (48) for controlling the pointer to move with an increased speed when it is determined that only one menu is displayed on the movement direction.

8. The apparatus according to claim 7, being adapted to perform the method according to one of claims 1-5
